# EUROPEAN PATENT APPLICATION

(11) **EP 4 847 191 A1**
(43) Date of publication of application: **02.12.2026**
(21) Application number: 26460014.9
(22) Date of filing: 26.05.2026
(51) Int. Cl.: B23P 15/00, B21H 3/02, B21K 1/46, B21K 1/56, C21D 9/00, F16B 25/00

(54) **METHOD OF MANUFACTURING A BIMETALLIC SCREW AND A BIMETALLIC SCREW**

(30) Priority: 27.05.2025 PL 45215625
(71) Applicant: Koelner Rawlplug IP Spolka z ograniczona odpowiedzialnoscia, 51-416 Wroclaw (PL)
(72) Inventor: FRYN, Krzysztof, 37-100 Lancut (PL); CHLEBUS, Pawel, 37-100 Lancut (PL); LECH, Damian, 37-111 Rakszawa (PL)
(74) Representative: Sleczka, Joanna

(57) **Abstract**

The object of the invention is a method for producing a bimetallic screw, in particular a concrete screw, and the concrete screw.

The method for producing a bimetallic screw, in particular a concrete screw, according to the invention, wherein the bimetallic screw consists of a first shank part and a second shank part, which are arranged one behind the other in the direction of the longitudinal axis, wherein the first shank part has a head, involves first joining together both shank parts, followed by the preparation of a thread. The method is characterised in that it comprises the following steps: preparing the first shank part from austenitic stainless steel by cold forging, followed by preparing the second shank part from martensitic stainless steel, followed by joining both shank parts by friction welding, followed by machining both shank parts by turning, and removing the flash, followed by preparing a thread on at least the second shank part, and followed by induction hardening of the second shank part. A bimetallic screw, in particular a concrete screw, characterised in that it is produced by the method according to the above-mentioned method.

The object of the invention is a method for producing a bimetallic screw, in particular a concrete screw, and the concrete screw.

The method for producing a bimetallic screw, in particular a concrete screw, according to the invention, wherein the bimetallic screw consists of a first shank part (4) and a second shank part (7), which are arranged one behind the other in the direction of the longitudinal axis (L), where the first shank part (4) has a head (3), involves first joining together both shank parts, followed by the preparation of a thread.

The method is characterised in that it comprises the following steps: preparing the first shank part (4) from austenitic stainless steel by cold forging, preparing the second shank part (7) from martensitic stainless steel, joining both shank parts (4,7) by friction welding, machining both shank parts (4,7) by turning, and removing the flash, preparing a thread (5) on at least the second shank part (7), and induction hardening of the second shank part (7).

A bimetallic screw, in particular a concrete screw, characterised in that it is produced by the above-mentioned method.

## Description

The object of the application is a method for producing a bimetallic screw and the bimetallic screw for concrete.

A method for producing a bimetallic screw, in particular a concrete screw, is known from publication WO2023285166A1. This method comprises a first shank part and a second shank part which are arranged one behind the other in the direction of a longitudinal axis (L) of the bimetallic screw and at a welding point are welded together by means of beam welding, the two shank parts being continuously moved relative to the welding beam and through the welding beam during welding.

Also known from patent EP3455510B1 is a self-tapping concrete screw comprising a screw shaft which is composed of two shaft parts, a front shaft part and a rear shaft part, the two shaft parts being joined by welding, the front shaft part consisting of stainless steel having the material number 1.4037.

The method for producing a bimetallic screw, in particular a concrete screw, according to the invention, wherein the bimetallic screw consists of a first shank part and a second shank part, which are arranged one behind the other in the direction of the longitudinal axis, wherein the first shank part has a head, involves first joining together both shank parts, followed by the preparation of a thread. The method is characterised in that it comprises the following steps: preparing the first shank part from austenitic stainless steel by cold forging, followed by preparing the second shank part from martensitic stainless steel, followed by joining both shank parts by friction welding, followed by machining both shank parts by turning, and removing the flash, followed by preparing a thread on at least the second shank part, and followed by induction hardening of the second shank part. The austenitic stainless steel is A4 austenitic steel of grade 1.4578. The martensitic stainless steel is stainless steel number 2H13 (1.4021). The martensitic stainless steel is stainless steel number 3H17M (1.4122). The martensitic stainless steel is non-alloy steel with a carbon content of 0.3-0.5%. The outer diameter of the first shank part and the outer diameter of the second shank part are equal. A groove is formed in the weld area during the machining by turning, the groove in the weld area having a smaller diameter than the thread core diameter. The width of the groove in the weld area is at least 1/3 of the screw core diameter. The thread is prepared by rolling, and the rolling of the thread is performed on both shank parts. The induction hardening of the second shank part is performed at a temperature above 1000°C. The flash is removed within 1 to 8 seconds after the completion of the machining by turning, and the flash has a temperature above 500°C during removal. The induction hardening is followed by the coating of the second shank part. The bimetallic screw is produced using the above-mentioned method.

The bimetallic screw consists of a first shank part and a second shank part, which are arranged one behind the other in the direction of the longitudinal axis and joined together, the first shank part being provided with a head. The bimetallic screw is characterised in that the first shank part along with the head is made of A4 austenitic steel of grade 1.4578 by cold forging, while the second shank part is made of stainless steel number 2H13 (1.4021), whereas the first shank part and the second shank part are joined by friction welding.

An embodiment of the bimetallic screw consists of a first shank part and a second shank part, which are arranged one behind the other in the direction of the longitudinal axis and joined together, the first shank part being provided with a head. The bimetallic screw is characterised in that the first shank part along with the head is made of A4 austenitic steel of grade 1.4578 by cold forging, whereas the second shank part is made of stainless steel number 3H17M (1.4122), whereas the first shank part and the second shank part are joined by friction welding.

An embodiment of the bimetallic screw consists of a first shank part and a second shank part, which are arranged one behind the other in the direction of the longitudinal axis and joined together, the first shank part being provided with a head. The bimetallic screw is characterised in that the first shank part along with the head is made of A4 austenitic steel of grade 1.4578 by cold forging, while the second shank part is made of non-alloy steel with a carbon content of 0.3-0.5%, whereas the first shank part and the second shank part are joined by friction welding.

The method for producing a bimetallic screw, in particular a concrete screw, as well as the bimetallic screw produced by this method, allows for producing a screw with very good parameters enabling its application on the exterior of buildings and under conditions of elevated corrosiveness. Due to the application of the friction welding technology, it is not required to specially prepare the shank parts, meaning the elements to be joined, which allows for facilitating the production process and reducing the costs. The application of friction welding also allows both shank parts to not necessarily have perfectly flat and/or chamfered welded planes. It is not required to make special chamfers on the surfaces to be joined, as places into which the material would flow during the welding. This facilitates the processes of preparing the semi-finished products, meaning the shank parts, and the positioning of these elements before the welding. Any imperfections in the surfaces to be welded or dimensional inaccuracies are compensated for by the flash generated during the process. This provides very high repeatability of the process. Furthermore, friction welding is a very fast process that results in very high strength of the joint. Furthermore, removal of the flash immediately after the welding process, within the first few seconds, significantly facilitates the accomplishment of this process, and allows for the performance of turning, which contributes to significantly faster and cheaper processing of the elements, and therefore contributes to reduction in the amount of dust during this processing. The weld area of the shank parts is characterised by very high hardness, which exceeds 550 HV, and therefore low plasticity and high brittleness. Due to the use of a groove with a diameter smaller than the thread core diameter and a width of at least 1/3 of the screw core diameter, the weld area is not subjected to plastic deformation during thread rolling, and allows for reduction in the wear of production tools for preparing the thread. Additionally, there is reduction in stresses in the weld area, which arise during thread rolling and which can cause fractures in the product. The use of induction hardening allows for local hardening of the tip made of martensitic steel (which enables correct assembly of the screw) and causes the main part of the screw made of A4 steel to not be at risk of losing its corrosion resistance due to intergranular corrosion caused by high temperature. On the other hand, the coating of the welded tip and the weld allows for improving the corrosion resistance of the weld area and the martensitic tip, and also allows for concealing dark discolourations generated during earlier steps of processing. The design of the product with two shank parts of the same external diameter allows for the preparation of a thread with uniform geometry along the entire cylindrical length of the screw, which allows for easy installation of the screw in concrete, and for minimising the thread wear during installation, which translates into high strength parameters of the joint. The application of the 1.4578 steel, which allows for cold forging, significantly reduces the risk of intergranular corrosion of the head and the shank part connected to the head. Therefore, the service life of the screw is extended. Furthermore, considering that said steel comprises an addition of copper, which increases plasticity, this facilitates the forming of the head and the shank part connected to the head, which also prevents the steel from cracking during processing due to high stresses. Preparing the second shank part from steel number 4H13 (1.4034) or 3H17M (1.4122), or non-alloy steel with a carbon content of 0.3-0.5%, allows for hardening, and thus achieving high hardness, which enables correct installation of the products in high strength class concrete. Furthermore, due to the difference in the node voltage of said steels and the A4 austenitic steel of grade 1.4578, the risk of the occurrence of decarbonisation in steel during welding is limited. In addition, considering that both shank parts are made of stainless steel, the risk of the occurrence of galvanic corrosion is reduced.

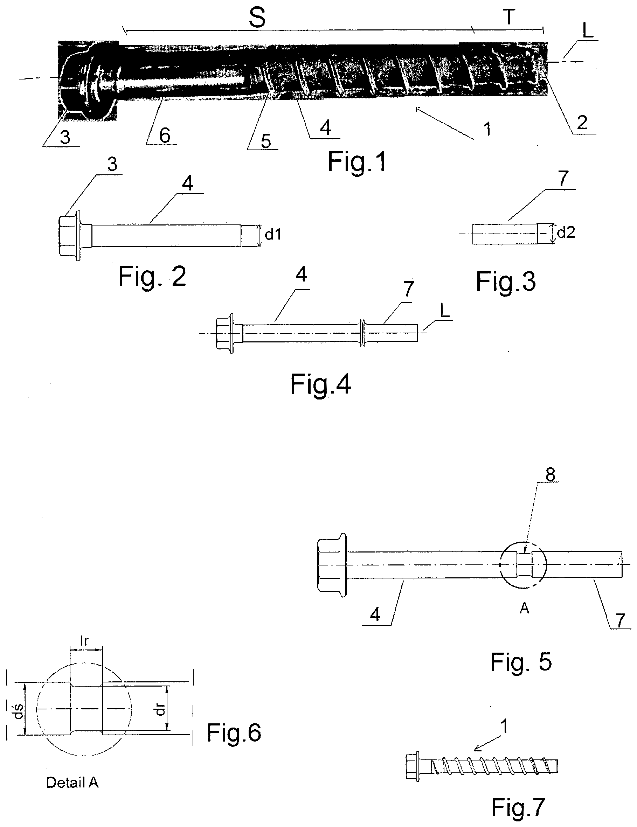

The method for producing a bimetallic screw as well as the screw according to the invention are explained in more detail in an embodiment and in the schematic drawings, where fig. 1 shows the bimetallic screw according to the invention, fig. 2 shows a semi-finished shank part of the screw with a head, fig. 3 - the semi-finished shank part made of martensitic steel, fig. 4 shows the screw after welding, fig. 5 shows the screw after the removal of flash, fig. 6 shows detail A of fig. 5, and fig. 7 shows the screw after rolling.

The first embodiment of the bimetallic screw 1 according to the invention extends along the longitudinal axis L from the front end 2 of the bimetallic screw 1 on the side to be inserted into a hole (not shown) all the way to the screw head 3 on the opposite side. The essentially cylindrical front shank part 4 of the bimetallic screw 1 has placed thereon a thread 5 which extends from the front end 2 to the rear threadless shank part 6, which is situated between the external thread 5 and the screw head 3. To allow for the thread to be cut into the wall of the hole, into which the bimetallic screw 1 is to be screwed, the second shank part 7, which constitutes the front cutting part T of the external thread 5, has been subjected to an induction hardening process at a temperature above 1000°C. This second shank part 7, which constitutes the front cutting part T, is made of stainless steel number 2H13 (1.4021), in accordance with the PN-EN 10088-1 standard of 2014. The first shank part 4 of the bimetallic screw 1 along with the head 3 is made from A4 austenitic steel of grade 1.4578 by cold forging.

The second embodiment of the bimetallic screw 1 according to the invention extends along the longitudinal axis L from the front end 2 of the bimetallic screw 1 on the side to be inserted into a hole (not shown) all the way to the screw head 3 on the opposite side. The essentially cylindrical front shank part 4 of the bimetallic screw 1 has placed thereon a thread 5 which extends from the front end 2 to the rear threadless shank part 6, which is situated between the external thread 5 and the screw head 3. To allow for the thread to be cut into the wall of the hole, into which the bimetallic screw 1 is to be screwed, the second shank part 7, which constitutes the front cutting part T of the external thread 5, has been subjected to an induction hardening process at a temperature above 1000°C. This second shank part 7, which constitutes the front cutting part T, is made of stainless steel number 3H17M (1.4122), in accordance with the PN-EN 10088-1 standard of 2014. The first shank part 4 of the bimetallic screw 1 along with the head 3 is made from A4 austenitic steel of grade 1.4578 by cold forging.

The third embodiment of the bimetallic screw 1 according to the invention extends along the longitudinal axis L from the front end 2 of the bimetallic screw 1 on the side to be inserted into a hole (not shown) all the way to the screw head 3 on the opposite side. The essentially cylindrical front shank part 4 of the bimetallic screw 1 has placed thereon a thread 5 which extends from the front end 2 to the rear threadless shank part 6, which is situated between the external thread 5 and the screw head 3. To allow for the thread to be cut into the wall of the hole, into which the bimetallic screw 1 is to be screwed, the second shank part 7, which constitutes the front cutting part T of the external thread 5, has been subjected to an induction hardening process at a temperature above 1000°C. This second shank part 7, which constitutes the front cutting part T, is made of non-alloy steel with a carbon content of 0.3-0.5%, in accordance with the PN-EN 10088-1 standard of 2014. The first shank part 4 of the bimetallic screw 1 along with the head 3 is made from A4 austenitic steel of grade 1.4578 by cold forging.

According to the invention, all the embodiments of the bimetallic screw 1 consist of two different steels that have been appropriately selected, namely the induction-hardened second shank part 7, which constitutes the cutting part T used to cut the thread in the wall of the hole, and the remaining shank part, which is the first shank part 4 constituting the corrosion-resistant fastening part S, used for fastening elements.

The method for producing a bimetallic screw consisting of a first shank part 4 and a second shank part 7, which are arranged one behind the other in the direction of the longitudinal axis (L), comprises the preparation of the first shank part 4 of austenitic stainless steel by cold forging, and the second shank part is prepared from martensitic stainless steel. The outer diameter (d1) of the first shank part 4 and the outer diameter (d2) of the second shank part 7 are equal. This is followed by joining both shank parts 4, 7 by friction welding. This is followed by machining both shank parts (4, 7) by turning, and removing the flash within 1 to 8 seconds after the completion of the machining. During removal, the flash has a temperature above 500°C. A groove (8) is formed in the weld area during the machining by turning. The groove (8) in the weld area has a diameter (dr) smaller than the thread core diameter (Id), whereas the width (Ir) of the groove (8) in the weld area is at least 1/3 of the screw core diameter (dś). Subsequently, a thread (5) is prepared by rolling on both shank parts (4, 7). Furthermore, the induction hardening of the second shank part (7) is performed at a temperature above 1000°C. The induction hardening is followed by the coating of the second shank part (7).

## Claims

1. A method for producing a bimetallic screw, in particular a concrete screw, consisting of a first shank part and a second shank part, which are arranged one behind the other in the direction of the longitudinal axis (L), wherein the first shank part has a head, whereas both shank parts are first joined together, followed by the preparation of a thread, **characterised in that** it comprises the following steps:
(a) preparing the first shank part (4) from austenitic stainless steel by cold forging,
(b) preparing the second shank part (7) from martensitic stainless steel,
(c) joining both shank parts (4, 7) by friction welding,
(d) machining both shank parts (4, 7) by turning, and removing the flash,
(e) preparing a thread (5) on at least the second shank part (7),
(f) induction hardening of the second shank part (7).

2. The method according to claim 1, **characterised in that** the austenitic stainless steel is A4 austenitic steel of grade 1.4578.

3. The method according to claim 1, **characterised in that** the martensitic stainless steel is stainless steel number 2H13 (1.4021).

4. The method according to claim 1, **characterised in that** the martensitic stainless steel is stainless steel number 3H17M (1.4122).

5. The method according to claim 1, **characterised in that** the martensitic stainless steel is non-alloy steel with a carbon content of 0.3 - 0.5%.

6. The method according to claim 1, **characterised in that** the outer diameter (d1) of the first shank part (4) and the outer diameter (d2) of the second shank part (7) are equal.

7. The method according to claim 1, **characterised in that** a groove (8) is formed in the weld area during the machining by turning.

8. The method according to claim 7, **characterised in that** the groove (8) in the weld area has a diameter (dr) smaller than the core diameter (Id) of the thread.

9. The method according to claim 7, **characterised in that** the width (Ir) of the groove (8) in the weld area is at least 1/3 of the screw core diameter (dś).

10. The method according to claim 1, **characterised in that** the thread (5) is prepared by rolling.

11. The method according to claim 10, **characterised in that** the rolling of the thread (5) is performed on both shank parts (4, 7).

12. The method according to claim 1, **characterised in that** the induction hardening of the second shank part (7) is performed at a temperature above 1000°C.

13. The method according to claim 1, **characterised in that** the flash is removed within 1 to 8 seconds after the completion of the machining by turning.

14. The method according to claim 1, **characterised in that** the flash has a temperature above 500°C during removal.

15. The method according to claim 1, **characterised in that** the induction hardening is followed by the coating of the second shank part (7).

16. A bimetallic screw, in particular a concrete screw, **characterised in that** it is produced by the method according to one of the preceding claims.

17. A bimetallic screw, in particular a concrete screw, consisting of a first shank part and a second shank part, which are arranged one behind the other in the direction of the longitudinal axis (L) and joined together, wherein the first shank part is provided with a head, **characterised in that** the first shank part (4) along with the head (3) is made of A4 austenitic steel of grade 1.4578 by cold forging, while the second shank part (7) is made of stainless steel number 2H13 (1.4021), whereas the first shank part (4) and the second shank part (7) are joined by friction welding.

18. A bimetallic screw, in particular a concrete screw, consisting of a first shank part and a second shank part, which are arranged one behind the other in the direction of the longitudinal axis (L) and joined together, wherein the first shank part is provided with a head, **characterised in that** the first shank part (4) along with the head (3) is made of A4 austenitic steel of grade 1.4578 by cold forging, while the second shank part (7) is made of stainless steel number 3H17M (1.4122), whereas the first shank part (4) and the second shank part (7) are joined by friction welding.

19. A bimetallic screw, in particular a concrete screw, consisting of a first shank part and a second shank part, which are arranged one behind the other in the direction of the longitudinal axis (L) and joined together, wherein the first shank part is provided with a head, **characterised in that** the first shank part (4) along with the head (3) is made of A4 austenitic steel of grade 1.4578 by cold forging, while the second shank part (7) is made of non-alloy steel with a carbon content of 0.3-0.5%, whereas the first shank part (4) and the second shank part (7) are joined by friction welding.
